# EUROPÄISCHE PATENTSCHRIFT

(11) **EP 1 206 900 B1**
(45) Veröffentlichungstag und Bekanntmachung des Hinweises auf die Patenterteilung: **20.10.2004**
(21) Anmeldenummer: 00956489.9
(22) Anmeldetag: 25.08.2000
(51) Int. Cl.: H05B 3/48, B29C 45/27

(54) **ELEKTRISCHE HEIZUNG FÜR HEISSKANALSYSTEME UND VERFAHREN ZUR HERSTELLUNG EINER SOLCHEN HEIZUNG**
ELECTRIC HEATING ELEMENT FOR HOT RUNNER SYSTEMS AND A METHOD FOR PRODUCING A HEATING ELEMENT OF THIS TYPE
DISPOSITIF DE CHAUFFAGE ELECTRIQUE POUR SYSTEMES DE CANAUX CHAUFFANTS ET PROCEDE POUR LA PRODUCTION D'UN TEL DISPOSITIF DE CHAUFFAGE

(30) Priorität: 28.08.1999 DE 19941038
(43) Veröffentlichungstag der Anmeldung: 22.05.2002
(73) Patentinhaber: Günther Heisskanaltechnik GmbH, 35066 Frankenberg/Eder (DE)
(72) Erfinder: GÜNTHER, Herbert, 35108 Allendorf (DE); KRETSCHMAR, Christel, 01809 Borthen (DE); OTSCHIK, Peter, 01728 Possendorf (DE)
(74) Vertreter: Olbricht, Karl Heinrich, Dipl.-Phys.
(86) Internationale Anmeldenummer: PCT/EP2000/008338
(87) Internationale Veröffentlichungsnummer: WO 2001/017317

(56) Entgegenhaltungen:
- EP-A- 0 388 242
- DE-A- 3 001 017
- US-A- 4 451 974
- US-A- 5 136 141
- US-A- 5 180 594

## Beschreibung

Die Erfindung betrifft eine elektrische Heizung für Heißkanalsysteme, insbesondere für Heißkanalverteiler und/oder Heißkanaldüsen, gemäß Anspruch 1. Ferner betrifft sie ein Verfahren zur Herstellung einer solchen Heizung gemäß Anspruch 22.

Elektrische Heizeinrichtungen für Heißkanalsysteme sind gewöhnlich als separate Bauelemente ausgebildet mit rohrförmigen Heizelementen, die in lösbaren Ummantelungen integriert und umfangsseitig auf die meist rohrförmigen Strömungskanäle aufsetzbar sind. Die Ummantelungen können, wie beispielsweise in DE-U1-295 07 848 oder US-PS-4,558,210 offenbart, als starre Gebilde mit an den Strömungskanal angepaßten Krümmungsradien ausgebildet sein, die durch zusätzliche Halte- bzw. Spannelemente auf dem Rohrumfang in axialer Richtung festlegbar sind. Oder Sie werden als flexible Heizstreifen bzw. -matten zwischen elektrisch isolierenden Schichten mit gegebenenfalls unterschiedlichen Wärmeleitungsvermögen ausgebildet, die auf dem Rohrumfang des Strömungskanals fixiert werden. EP-B1-0 028 153 sieht hierzu wärmeleitende Klebestreifen vor, während WO 97/03540 flexible Haltebänder mit Klett- oder Druckknopfverschlüssen verwendet.

Ein wesentlicher Nachteil der generell mechanisch lösbaren Heizvorrichtungen besteht in einem meist wenig effizienten Wärmeübergang von dem Heizelement auf den rohrförmigen Strömungskanal. Um dies zu kompensieren, ist man gezwungen, die Heizvorrichtung insgesamt größer zu dimensionieren, was zu hohen Wärmekapazitäten führt. Die dadurch bedingten großen thermischen Massen verlängern die Aufheiz- und Abkühlphasen, wodurch sich Begrenzungen hinsichtlich erhöhter Produktivitätsraten ergeben.

Darüber hinaus bestehen Probleme bei der linearen Temperaturverteilung innerhalb der Wandungen des Strömungskanals. Letztere weisen nur selten über die gesamte Länge des Strömungskanals eine konstante Temperatur auf. Insbesondere im Bereich der Düsenspitze läßt sich nur mit relativ hohem Aufwand ein ausreichender Wärmeübergang und damit eine ausreichende Temperatur erzielen. Dies wiederum beeinflußt die gesamte Temperatureinstellung und den damit verbundenen Regelungsaufwand.

Ziel der Erfindung ist es, unter Überwindung dieser und weiterer Nachteile des Standes der Technik, eine elektrische Heizvorrichtung für Heißkanalsysteme zu schaffen, die eine generell verbesserte und individuell präzise einstellbare Wärmeübergangs- und Temperaturverteilungs-Charakteristik zwischen Heißkanalhauptteil und Düse ermöglicht. Sie soll ferner ohne größeren Steuerungsaufwand leicht zu handhaben sein.

Ein weiteres Ziel der Erfindung ist es, eine form- und kraftschlüssig integrierte elektrische Heizvorrichtung für Heißkanalsysteme zu schaffen, die bei kompakten Abmessungen mechanisch nicht lösbar auf einer einem Strömungskanal zugeordneten Wandung, beispielsweise einem Materialrohr, einem Stab, einem Verteilerarm o.dgl., aufbringbar ist und selbst extremen mechanischen und/oder thermischen Belastungen dauerhaft standhält.

Darüber hinaus besteht ein wichtiges Ziel der Erfindung darin, ein Verfahren zur Herstellung einer Heizung für Heißkanalsysteme, insbesondere für Heißkanalverteiler und/oder Heißkanaldüsen zu entwickeln, welches bei minimalem Aufwand einfach und kostengünstig durchführbar ist.

Hauptmerkmale der Erfindung sind in Anspruch 1, 21 und 22 angegeben.

Ein Heißkanalsystem, insbesondere ein Heißkanalverteiler und/oder eine Heißkanaldüse mit einem Materialrohr, das wenigstens eine einem Strömungskanal zugeordnete Wandung aufweist, hat eine elektrische Heizung bestehend aus wenigstens einer mittels Direktbeschichtung stoffschlüssig auf der Wandung des Materialrohrs aufgebrachten Isolierschicht und aus wenigstens einer mittels Direktbeschichtung stoffschlüssig auf der Isolierschicht aufgebrachten, Heizleiterbahnen aufweisenden Heizschicht, wobei die Isolierschicht und die Heizschicht eine Schichtheizung mit geringer Dickenabmessung bilden und wobei die Isolierschicht eine glasartige und/oder keramische Dielektrikumsschicht ist, die nach zumindest einem Einbrennprozeß gegenüber der dem Strömungskanal zugeordneten Wandung unter Druckvorspannung steht.

Ein geeignetes Verfahren zum Herstellen einer Heizung für Heißkanalsysteme, insbesondere auf Heißkanalverteilem und/oder auf Heißkanaldüsen mit einem Materialrohr, das wenigstens eine einem Strömungskanal zugeordnete Wandung aufweist, sieht erfindungsgemäß vor, daß wenigstens eine Isolierschicht mittels Direktbeschichtung stoffschlüssig auf der Wandung des Materialrohrs und wenigstens eine Heizleiterbahnen aufweisende Heizschicht mittels Direktbeschichtung stoffschlüssig auf der Isolierschicht aufgebracht werden, wobei zumindest eine Isolierschicht eine keramische Dielektrikumsschicht ist und wobei innerhalb dieser Schicht beim Einbrennen eine Druckvorspannung gegenüber der dem Strömungskanal zugeordneten Wandung erzeugt wird.

Das stoffschlüssige Aufbringen der Heizung in Schichten sorgt für eine dauerhaft feste Verbindung mit der Wandung des Strömungskanals und damit für einen festen Halt auf dem Heißkanalverteiler oder der Heißkanaldüse. Aufgrund der durch die Direktbeschichtung erzielten geringen Dickenabmessungen nimmt die Heizung insgesamt nur wenig Raum ein, so daß sich im Vergleich zu herkömmlichen Heizvorrichtungen bei nahezu gleichen Leistungsmerkmalen äußerst kompakte Bauformen realisieren lassen. Zudem kann die Leistungsdichte deutlich erhöht werden, da die Wärme direkt auf der Oberfläche des zu beheizenden Heißkanalelements erzeugt und abgenommen wird. Eine Überhitzung der meist empfindlichen Heizelemente wird zuverlässig vermieden. All dies gewährleistet zusammen mit der mechanisch nicht lösbaren Anbringung der Heizung auf der Strömungskanal-Wandung einen stets optimalen Wärmeübergang von der Heizschicht über die Isolierschicht auf die Wandung, die äußerst gleichmäßig und präzise erwärmt wird. Aufwendige Steuerungseinrichtungen, die durch thermische Massen bedingte Reaktionsverzögerungen berücksichtigen müssen, sind nicht erforderlich. Der Strömungskanal läßt sich rasch und präzise aufheizen und ebenso wieder abkühlen, was sich günstig auf den gesamten Produktionsablauf auswirkt. Die Schmelztemperatur läßt sich exakt und mit einfachen Mitteln kontrollieren.

Ein weiteres wichtiges Merkmal der Erfindung stellt die Ausbildung einer spannungstoleranten Verbindung zwischen der keramischen Dielektrikumsschicht und dem Heißkanalrohr dar, welches bei Betriebstemperatur einer durch den Spritzgießprozeß technologisch bedingten pulsierenden Innendruckbelastung ausgesetzt wird. Diese Belastung und die zum Erreichen der Betriebstemperaturen erforderliche Erwärmung der Strömungskanal-Wandung auf Temperaturen zwischen 300 und 450 °C führen zu elastischen Dehnungsvorgängen, die unmittelbar auf die Heizung übertragen werden. Der jeweilige Grad der Verformung hängt von materialspezifischen Größen (E-Modul) und von technologischen Randbedingungen (Betriebstemperatur, Rohrwandstärke, Höhe des Innendrucks) ab. Dies kann dazu führen, daß auf dem Stahlrohr aufgebrachte Schichten im Zusammenwirken der genannten Größen in unterschiedlichem Maße in den Bereich von Zugspannungen gelangen, was die Erfindung jedoch zuverlässig vermeidet.

Die bevorzugt ein Glas, eine Glaskeramik oder eine Keramik enthaltende, als keramische Dielektrikumsschicht ausgebildete Isolierschicht steht nach dem Einbrennprozeß gegenüber der dem Strömungskanal zugeordneten Wandung erfindungsgemäß unter einer definierten Druckvorspannung, so daß bei der Innendruckbelastung radienabhängig in unterschiedlicher Höhe auftretende Delaminationskräfte innerhalb der Schicht kompensiert werden. Die gesamte Heizung besitzt eine außerordentlich gute Haftfestigkeit auf der meist rohrförmigen Wandung des Strömungskanals und hält selbst extremen mechanischen und thermischen Belastungen dauerhaft stand. Dadurch sind stets optimale Produktionsergebnisse gewährleistet.

Ein weiterer Vorteil besteht darin, daß die Heizung zuverlässig gegen Feuchtigkeitsaufnahme geschützt ist. Bei herkömmlichen Heizungen mit Rohrheizkörpern oder Wendelrohrpatronen ergeben sich durch die Feuchtigkeitsaufnahme des hygroskopischen Isoliermaterials neben Installationsproblemen auch Isolationsprobleme, da durch die eindringende Feuchtigkeit Kurzschlüsse entstehen können. Um dies zu vermeiden werden zusätzliche Regler benötigt, die bei der Inbetriebnahme der Heizung mit verminderter Heizleistung zunächst die Feuchtigkeit austreiben. Die erfindungsgemäße Heizung braucht dies nicht. Sie ist vielmehr völlig dicht und unverlierbar mit dem Strömungskanal verbunden ist, so daß der bisher erforderliche Montage- und Regelungsaufwand vollständig entfällt. Dies wirkt sich günstig auf die Anschaffungs- und Montagekosten eines Heißkanalsystems aus.

Vorteilhafte Ausgestaltungen der Erfindung sind Gegenstand der Ansprüche 2 bis 20 und 23 bis 42.

Einen weiteren wichtigen Bestandteil der erfinderischen Lösung stellt ferner die Anpassung der Einbrenntemperaturen der aufzubringenden Schichten an die Härtungs- bzw. Vergütungstemperatur der Strömungskanal-Wandung dar. Das Herstell-Verfahren läßt sich dadurch auf vielfältige Weise optimieren und auf nur wenige Verfahrensschritte reduzieren.

Die Schichten der Heizung sind erfindungsgemäß eingebrannte Folien oder eingebrannte Dickschichtpasten, die bevorzugt im Siebdruckverfahren, insbesondere im Runddruckverfahren auf den Rohrkörper der Heißkanaldüse aufgebracht werden. Dies gewährleistet eine stets gleichmäßige Verteilung der Schichten bei konstanten Schichtdicken.

Das Einbrennen der Schichten erfolgt bevorzugt im co-firing-Verfahren und bei Temperaturen, welche die erforderliche Vergütungstemperatur des Metalls nicht überschreiten. Ein bereits im Metall vorgebildeter Gefügezustand bleibt hierdurch erhalten. Erfindungsgemäß werden auch Härtungstemperaturen von der Dielektrikumsschicht toleriert, die oberhalb der Einbrenntemperatur liegen.

Die induktive Härtung des mit einer keramischen Grünfolie oder einer noch nicht eingebrannten Dickschichtpaste beschichteten Stahlrohres in Verbindung mit dem gleichzeitig ablaufenden Einbrennprozeß der keramischen Beschichtung ist für die Durchführung des erfindungsgemäßen Verfahrens besonders gut geeignet, da bei diesem Prozeß der Wärmeübergang von dem induktiv erhitzten Stahlrohr ausgeht und die Erwärmung der einzubrennenden Schicht von innen her erfolgt. Auf diese Weise können die in der Dickschichtpaste enthaltenen flüchtigen organischen Komponenten wie Bindemittel und Druckträger problemlos aus dem allmählich versinternden glaskeramischen Materialsystem entweichen, ohne daß Gasreste eingeschlossen werden. Blasenbildung wird somit zuverlässig verhindert. Das Schichtgefüge wird exakt homogen ausgebildet.

Gemäß der Erfindung wird eine spannungstolerante und haftfeste Verbindung zwischen der keramischen Dielektrikumsschicht und der Strömungskanal-Wandung durch die Ausbildung einer gezielten Druckvorspannung in der keramischen Dielektrikumsschicht in der Weise ermöglicht, indem in Abhängigkeit von den oben genannten dehnungsrelevanten Kenngrößen des Heißkanalrohres fallweise eine jeweils spezifische Fehlanpassung des linearen Ausdehnungskoeffizienten der keramischen Dielektrikumsschicht TEC_{DE} an den entsprechenden Wert des metallischen Heißkanalrohres TEC_{M} vorgegeben wird, wobei die Differenzausdehnung TEC_{M}-TEC_{DE} wenigstens 5 ·10⁻⁶K⁻¹ beträgt.

Die erfindungsgemäße Dielektrikumsschicht wird durch Einbrennen eines glasig-kristallinen Materialsystems auf der Metallwandung des Strömungskanals vorzugsweise innerhalb eines Temperaturbereichs zwischen 800 und 1100 °C erhalten. Dieser Bereich entspricht den üblichen Härtungstemperaturen der meisten kommerziellen Werkzeugstahlsorten für Warmarbeit.

Darüber hinaus enthält das als Dickschichtpaste oder Grünfolie vorwiegend glasigkristalline Materialsystem erfindungsgemäß mindestens ein vorgebildetes Glas, welches bei der jeweiligen Einbrenntemperatur die Metalloberfläche benetzt und dabei zumindest teilweise in den kristallinen Zustand übergeht. Denkbar ist allerdings auch die Verwendung einer Glaskeramik oder eines Keramik-Werkstoffs.

Zusätzlich bzw. alternativ kann das Materialsystem mindestens ein weiteres, unter Einbrennbedingungen nicht kristallisierendes Glas sowie mindestens eine a priori kristalline Verbindung enthalten, wobei durch Optimierung der Mengenanteile der vorgebildeten glasigen und kristallinen Bestandteile des Materialsystems unter Berücksichtigung ihrer jeweiligen TEC-Inkremente unter den Bedingungen des jeweiligen Einbrennvorgangs eine keramische Dielektrikumsschicht mit einem TEC-Wert im Bereich zwischen 5 ·10⁻⁶K⁻¹ und 7 ·10⁻⁶K⁻¹ erhalten wird.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine schematische Schnittansicht einer Heißkanaldüse mit einer Flachschichtheizung,
- Fig. 2: die Heizung von Fig. 1 in einer abgewickelten und teilweise aufgefalteten Darstellung,
- Fig. 3: eine Schnittansicht einer anderen Ausführungsform einer Heißkanaldüse mit einer Flachschichtheizung,
- Fig. 4: die Heizung von Fig. 3 mit einem Thermofühler in abgewickelter Darstellung,
- Fig. 5: eine Schnittansicht einer weiteren Ausführungsform einer Heißkanaldüse mit einer Flachschichtheizung,
- Fig. 6: eine andere Art der Heizungs- und Thermofühler-Anordnung und
- Fig. 7: eine noch andere Ausführungsform einer Heizung mit Thermofühler.

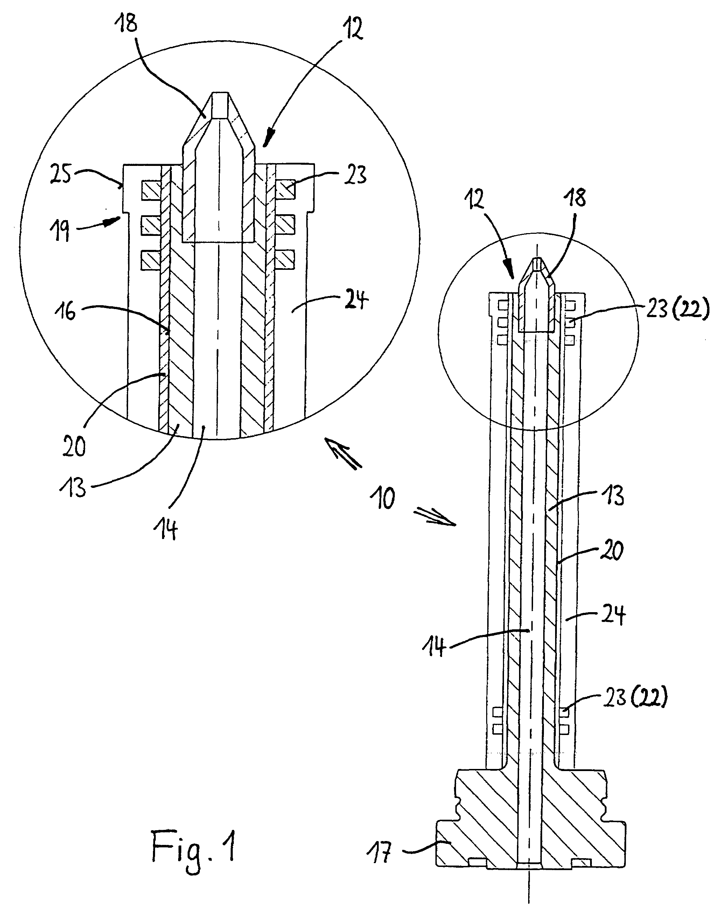

Die in Fig. 1 skizzierte Heißkanaldüse 12 hat als Bestandteil einer Spritzgußanlage für die thermoplastische Kunststoffverarbeitung zur Festlegung an einem (nicht dargestellten) Verteiler ein (ebenfalls nicht gezeichnetes) Gehäuse, in das ein insgesamt zylindrisches Materialrohr 13 einsetzbar ist. Ein an diesem endseitig ausgebildeter Sockel 17 schließt bündig mit dem Gehäuse ab und liegt dichtend an dem Verteiler an. In das sich in Axialrichtung längserstreckende Materialrohr 13 ist endseitig eine Düsenspitze 18 eingesetzt, vorzugsweise eingeschraubt, die den in dem Materialrohr 13 ausgebildeten Strömungskanal 14 bis an die (nicht dargestellte) Ebene eines (ebenfalls nicht sichtbaren) Formnests fortsetzt. Die Düsenspitze 18 kann auch bei gleicher Funktionsweise mit dem Materialrohr 13 einstückig sein.

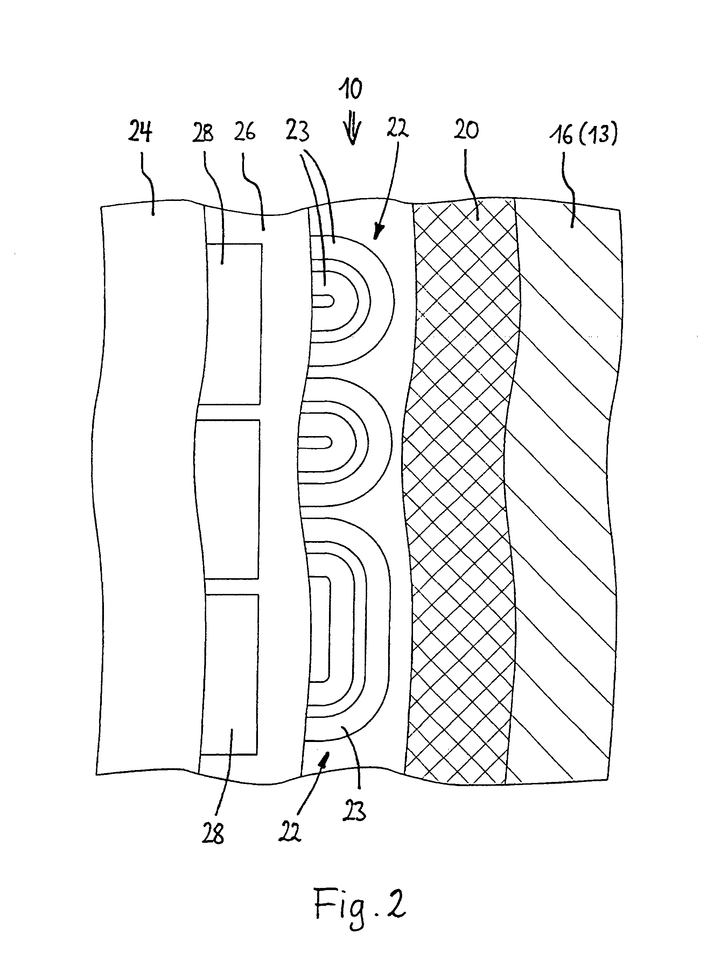

Auf dem Umfang der Wandung 16 des aus Stahl gefertigten Materialrohrs 13 ist eine Heizung 10 aufgebracht. Diese ist als Flachschichtheizung ausgebildet mit einer unmittelbar auf dem Metall aufgebrachten keramischen Dielektrikumsschicht 20 als Isolationsschicht, einer darüber aufgebrachten Heizschicht 22, die - wie in Fig. 2 schematisch angedeutet - mäanderförmige Heizleiterbahnen 23 aufweisen kann, sowie einer äußeren Abdeckschicht 24, welche die Heizleiterbahnen 23 und die darunter liegende Dielektrikumsschicht 20 nach außen hin abdeckt und elektrisch isoliert. Die beliebig gestaltbaren Heizleiterbahnen 23 können je nach erforderlicher Leistung in unterschiedlicher Dichte und Anordnung auf der Isolationsschicht 20 aufgebracht sein. Hierdurch läßt sich bei Bedarf eine definierte Temperaturverteilung innerhalb des Materialrohres 13 erzielen.

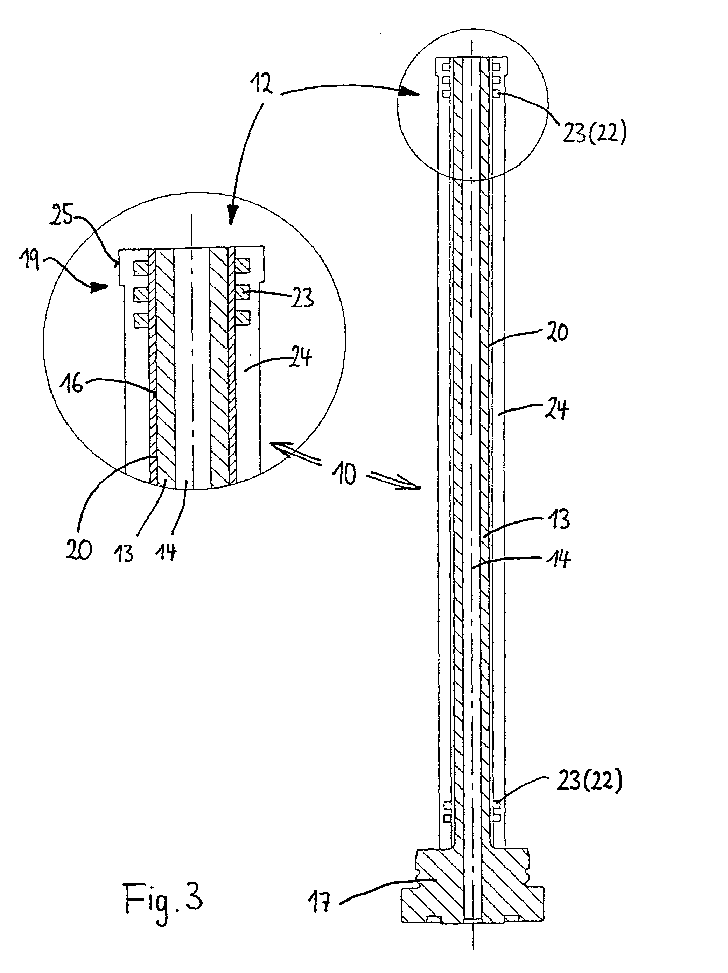

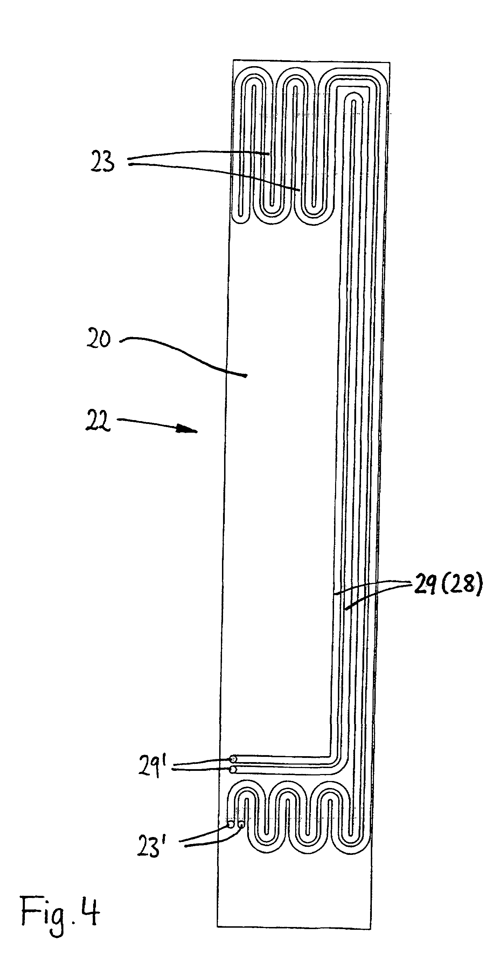

Eine andere Ausführungsform einer Heißkanaldüse 12 ist in Fig. 3 dargestellt. Das Materialrohr 13 ist ohne eigene Düsenspitze 18 ausgebildet. Die Heizschicht 22 mit den Heizleiterbahnen 23 ist auf der keramischen Isolationsschicht 20 bis an das äußere freie Ende des materialführenden Rohres 13 herangeführt. In diesem Endbereich 19 bildet die Abdeckschicht 24 eine umfangsseitige Dichtfläche 25, die eine Abdichtung zu angrenzenden Bauelementen bewirkt. Auf diese Weise kann verhindert werden, daß an die nähere Umgebung ungewollt Wärme abgegeben wird. Die Ausgestaltung der Heizleiterschicht 22 ist aus Fig. 4 ersichtlich. Man erkennt, daß sich die mäanderförmig verlaufenden Heizleiterbahnen 23 in den jeweiligen Endbereichen des Materialrohrs 13 konzentrieren, d.h. im Endbereich 19 und vor dem Sockelbereich 17. Dadurch wird die extrem hoch ansetzbare Leistung bis weit in den Spitzenbereich der Düse 12 eingebracht, was eine insgesamt optimale Temperaturführung ermöglicht.

Selbst thermisch empfindliche Materialien, die ein Verarbeitungsfenster von nur wenigen Grad aufweisen, lassen sich problemlos Verarbeiten.

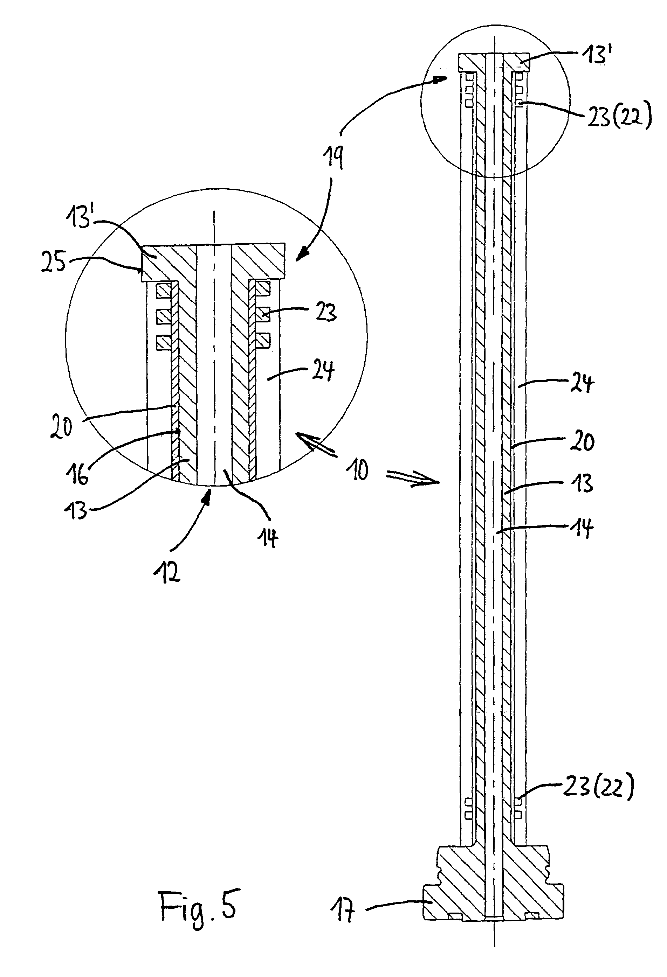

Sollte die Abdeckschicht 24 nicht in der Lage sein, die erforderlichen Dichtungsfunktionen zu übernehmen, kann das Materialrohr 13 in seinem Endbereich 19 mit einem Stahlbund 13' oder einem Flansch versehen sein, der umfangsseitig eine entsprechende Dichtfläche 25 aufweist. Die Heizung 10 ist hier - wie Fig. 5 zeigt - zwischen dem Sockel 17 und dem Bund 13' auf der zylindrischen Wandung 16 des Materialrohrs 13 aufgedruckt.

Um sowohl den Anstieg als auch den Verlauf der Temperatur innerhalb des Materialrohrs 13 bzw. innerhalb der Wandung 16 verfolgen bzw. kontrollieren zu können, ist zwischen der Heizschicht 22 und der Abdeckschicht 24 zumindest abschnittsweise wenigstens eine Schicht 28 aus einem PTC-Material vorgesehen, dessen Widerstand mit steigender Temperatur zunimmt (Fig. 2). Für einen besseren Wärmekontakt befindet sich zwischen der Heizschicht 22 und der Widerstandschicht 28 eine elektrisch isolierende Kontaktschicht 26, die bei Bedarf auch zwischen weiteren Schichten vorgesehen sein kann.

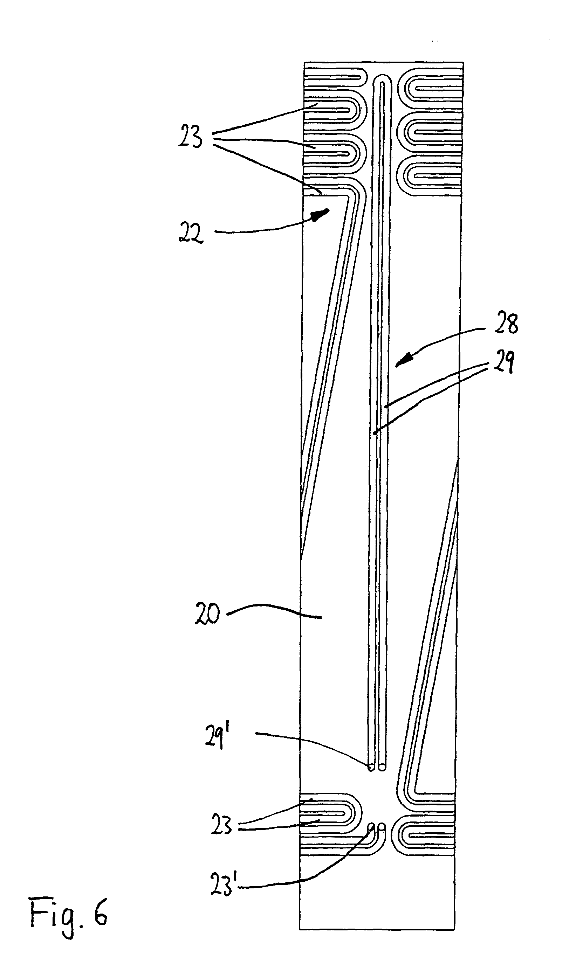

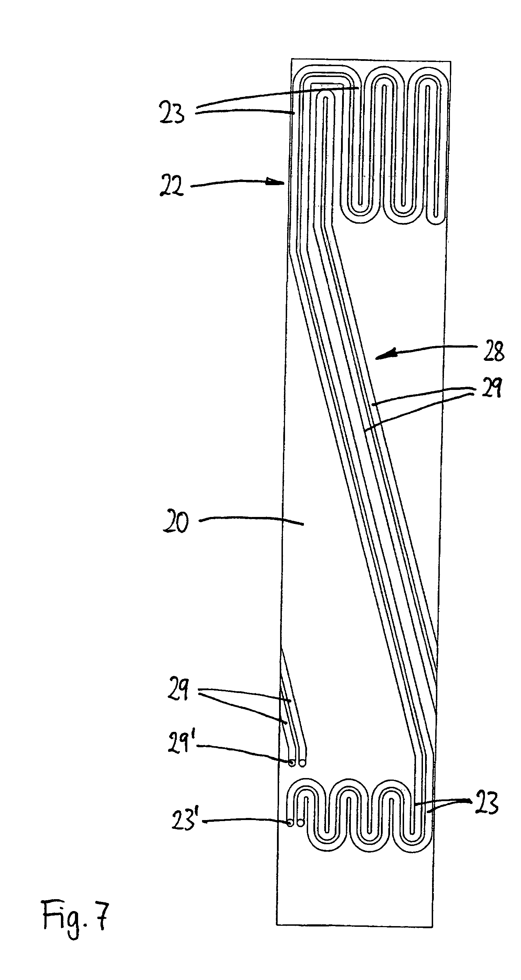

Die als Thermoelement ausgebildete Widerstandschicht 28 kann ebenso wie die Heizschicht 22 Leiterbahnen 29 aufweisen, die als Thermofühler den Temperaturverlauf messen (siehe Fig. 4). Die Leiterbahnen 29 liegen dabei zweckmäßig in der gleichen Ebene wie die Heizleiterbahnen 23 der Heizschicht 22 und werden gemeinsam mit diesen von der Abdeckschicht 24 nach außen hin geschützt. Auf diese Weise ist die Höhe der Heizung auf ein Minimum reduziert. Fig. 6 und 7 zeigen je eine alternative Möglichkeit für eine Gestaltung der Heizleiterbahnen 23 sowie der Leiterbahnen 29 für die Temperaturmessung.

Jede Schicht 20, 22, 24, 26, 28 wird mittels Direktbeschichtung stoffschlüssig auf der Rohrwandung 16 aufgetragen und anschließend unter den jeweils materialspezifisch vorgegebenen Einbrennbedingungen eingebrannt, so daß ein stoffschlüssiger Schichtverbund entsteht. Durch eine spezifische Fehlanpassung des linearen thermischen Ausdehnungskoeffizienten der Dielektrikumsschicht 20 (TEC_{DE}) an den linearen thermischen Ausdehnungskoeffizienten des Materialrohrs 13 (TEC_{M}) wird jedoch beim Einbrennen der Isolationsschicht 20 innerhalb dieser eine mechanische Druckvorspannung erzeugt. Durch diese spannungstolerante Verbindung ist die Isolationsschicht 20 als Trägerschicht der Heizung 10 in der Lage, der durch den Spritzgießprozeß technologisch bedingten pulsierenden Innendruckbelastungen problemlos standzuhalten, ohne daß Risse oder sonstige Beschädigungen an der Heizung 10 auftreten. Da die einzelnen Funktionsschichten 20, 22, 24, 26, 28 des Schichtverbunds aufgrund ihres materialspezifisch sehr ähnlichen Aufbaus zudem untereinander eine außerordentlich gute Haftfestigkeit aufweisen, hält die Heizung 10 insgesamt selbst extremen mechanischen und/oder thermischen Belastungen dauerhaft stand.

Als Beschichtungsverfahren zum Auftragen der einzelnen Funktionsschichten eignet sich die Folien- und die Dickschicht-Siebdrucktechnik. Bevorzugt verwendet man allerdings die Dickschicht-Siebdrucktechnik unter Anwendung der Runddrucktechnologie.

Hierbei ist es von Vorteil, wenn man in der bevorzugt in drei Einzellagen aufgebrachten Dielektrikumsschicht 20 in Längsrichtung der Wandung 16 des Materialrohrs 13 einen (nicht dargestellten) Spalt vorsieht. Dadurch wird vermieden, daß die Einzellagen der Dielektrikumsschicht 20 nach dem Auftragen überlappen, was zu nicht gewünschten Spannungen oder gar Abplatzungen führen kann.

Eine insgesamt ökonomische Verfahrensführung erzielt man, wenn parallel zu dem Einbrennprozeß der Dielektrikumschicht 20 eine induktive Härtung des Materialrohrs 13 durchgeführt wird. Sowohl hierbei, als auch bei den nachfolgenden Einbrennvorgängen ist es wichtig, daß die jeweiligen Einbrennbedingungen (Einbrenntemperatur, Haltezeit, Abkühlrate) an die durch die verwendete Stahlsorte vorgegebenen Härtungs- und Vergütungstemperaturen angepaßt sind. Insbesondere dürfen die Einbrenntemperaturen der nachfolgenden Schichten die Vergütungstemperaturen des Metalls nicht überschreiten, um den bereits vorgebildeten Gefügezustand des Metalls zu erhalten. Diese Anpassung kann beispielsweise durch eine geeignete Variation der Prozeßparameter für den Einbrennvorgang erreicht werden. Möglich ist aber auch eine materialspezifische Anpassung der zu verwendenden Dickschicht-Pasten.

Das Materialrohr 13 von Fig. 1 besitzt ein Durchmesserverhältnis von Außen- zu Innendurchmesser zwischen 1,4 bis 2,5, vorzugsweise von 2,0, so daß bei einem Außendurchmesser von beispielsweise 10 mm die Wandung 16 mindestens 2,8 mm dick ist. Letztere wird während des Spritzgießvorgangs betriebsbedingt einer pulsierenden Innendruckbelastung von etwa 2000 bar und einer Temperatur von etwa 300 °C ausgesetzt. Der Stahl des Heißkanalrohrs 13 besitzt einen linearen thermischen Ausdehnungskoeffizient (TEC) von 11 ·10⁻⁶K⁻¹ im Temperaturbereich zwischen 20 und 300 °C und einen E-Modul von 2 ·10⁶ bar. Die zur Härtung des Materials erforderliche Wärmebehandlungstemperatur liegt vorzugsweise im Bereich zwischen 800 und 1050 °C.

Auf die zwecks verbesserter Haftfestigkeit in bekannter Weise aufgerauhte Metalloberfläche 16 wird im Runddruckverfahren eine Dickschicht-Dielektrikumspaste aufgebracht, deren Feststoffanteil ausschließlich aus einem im Temperaturbereich oberhalb 900 °C in situ kristallisierenden Glas mit den Hauptkomponenten BaO, Al₂O₃ und SiO₂ in der näherungsweise molaren Zusammensetzung BaO Al₂O₃ 4 SiO₂ besteht. Die nach dem Einbrennen bei 950 °C erhaltene Dielektrikumsschicht 20 besitzt einen TEC von 6 · 10⁻⁶K⁻¹ im Temperaturbereich 20 bis 300 °C.

Bedingt durch den hierdurch entstehenden TEC-Mismatch zwischen Metallwandung 16 und Dielektrikumsschicht 20 in der Größenordnung 5 · 10⁻⁶K⁻¹ ist beim Abkühlen des mit dem Dielektrikum beschichteten Heißkanalrohrs 16 im Temperaturbereich der reinelastischen Deformation, d.h. zwischen der Transformationstemperatur des Glases von etwa 700 °C und Raumtemperatur, mit dem Aufbau einer Druckspannung von etwa 3500 bar zu rechnen (bei einem angenommenen E-Modul der Dielektrikumsschicht 20 von 2 · 10⁶ bar). Die Höhe der Druckvorspannung erreicht noch nicht den kritischen Grenzbereich der Eigendruckfestigkeit des Dielektrikums, der oberhalb von 6000 bar beginnt. Sie ist jedoch ausreichend, um das Auftreten von Zugspannungen in der Dielektrikumsschicht 20 und damit auch in den nachfolgenden Schichten 22, 24 zuverlässig zu verhindern, wenn die 2,8 mm dicke Rohrwandung 16 des Heißkanalrohrs 12 bei einer Belastung von 2000 bar zyklisch gedehnt wird.

Die elektrischen Anschlüsse 23' und 29' für die Heizleiterbahnen 23 und für die Widerstandschicht 28 werden ebenfalls in Dickschichttechnik ausgeführt, wobei die hierfür erforderlichen Kontakte so gestaltet sind, daß die Leistungszufuhr bzw. Informationsübertragung über steckbare Kabelverbindungen erfolgen kann.

Die Erfindung ist nicht auf eine der vorbeschriebenen Ausführungsformen beschränkt, sondern in vielfältiger Weise abwandelbar. So kann man innerhalb des Materialrohrs 13 Heizstäbe vorsehen, die mit der oben beschriebenen Heizung beschichtet sind. Auch kann das Rohr einen ovalen oder eckigen Querschnitt aufweisen. Anstelle der Dickschicht-Pasten kann man sogenannte Grünfolien verwenden, die auf dem Rohrumfang fixiert und anschließend eingebrannt werden. Das Härten des Materialrohrs 13 kann prinzipiell durch Martensitbildung oder durch Ausscheidungshärten erfolgen, wobei eine induktive Erwärmung vorzuziehen ist.

Man erkennt, daß auf dem Umfang der Wandung 16 eines zylindrischen Materialrohrs 13 einer Heißkanaldüse 12 in Direktbeschichtung eine elektrische Flachschichtheizung 10 installiert wird. Diese Flachschichtheizung 10 besteht aus einer unmittelbar auf das Metallrohr 13 aufgebrachten keramischen Dielektrikumsschicht 20, wenigstens einer Schicht 22 bestehend aus Heizleiterbahnen 23 sowie einer darüber aufgebrachten elektrisch isolierenden keramischen Abdeckschicht 24.

Als Beschichtungsverfahren eignet sich die Folien- oder die Dickschicht-Siebdrucktechnik. Bevorzugt verwendet man jedoch für den gesamten Schichtaufbau die Dickschichttechnik unter Verwendung der Runddrucktechnologie. Alternativ kann man die keramische Dielektrikumsschicht 20 als vorgefertigte Grünfolie auf dem Rohrumfang des Heißkanalrohres 12 fixieren und anschließend einbrennen.

Ein wichtiges Merkmal der Erfindung stellt die Ausbildung einer spannungstoleranten Verbindung zwischen der keramischen Dielektrikumsschicht 20 und dem Heißkanalrohr 13 dar, welches bei Betriebstemperatur einer durch den Spritzgießprozeß technologisch bedingten pulsierenden Innendruckbelastung ausgesetzt wird. Diese Belastung und die zum Erreichen der Betriebstemperaturen erforderliche Erwärmung des Materialrohrs 13 auf Temperaturen zwischen 300 und 450 °C führen zu elastischen Dehnungsvorgängen des Heißkanalrohres. Der jeweilige Grad der Verformung hängt von materialspezifischen Größen (E-Modul) und von technologischen Randbedingungen (Betriebstemperatur, Rohrwandstärke, Höhe des Innendrucks) ab. Dies führt dazu, daß die auf dem Stahlrohr 13 eingebrannte Dielektrikumsschicht 20 im Zusammenwirken der genannten Größen in unterschiedlichem Maße in den Bereich von Zugspannungen gelangen kann, was jedoch durch die innerhalb der Dielektrikumsschicht 20 ausgeprägten Druckvorspannung während des Betriebes kompensiert wird.

Dadurch erreicht man eine außerordentlich gute Haftfestigkeit der Dielektrikumsschicht 20 auf dem Materialrohr 13 der Heißkanaldüse 12, die selbst den bei der Innendruckbelastung radienabhängig in unterschiedlicher Höhe auftretenden Delaminationskräfte in der Schicht problemlos standhält. Von besonderem Vorteil ist insbesondere, daß mit der erfindungsgemäßen Heizung 10 eine extrem hohe Leistungsdichte auf sehr engem Raum erzeugt werden kann, wobei die Wärme stets genau an der Stelle erzeugt wird, wo auch die Wärmeabfuhr erfolgt. Die Temperaturführung ist äußerst einfach zu realisierem; die Temperaturverteilung exakt gleichmäßig.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- 10: Heizung
- 12: Heißkanaldüse
- 13: Materialrohr
- 13': Bund/Flansch
- 14: Strömungskanal
- 16: Wandung
- 17: Sockel
- 18: Düsenspitze
- 19: Endbereich

- 20: Isolierschicht/Dielektrikumsschicht
- 22: Heizschicht
- 23: Heizleiterbahn
- 23': Anschluß
- 24: Abdeckschicht
- 25: Dichtfläche
- 26: Kontaktschicht
- 28: Widerstandschicht
- 29: Thermofühler
- 29': Anschluß

## Patentansprüche

1. Heißkanalsystem, insbesondere Heißkanalverteiler und/oder Heißkanaldüse (12) mit einem Materialrohr (13), das wenigstens eine einem Strömungskanal (14) zugeordnete Wandung (16) aufweist, und mit einer elektrischen Heizung (10) bestehend aus wenigstens einer mittels Direktbeschichtung stoffschlüssig auf der Wandung (16) des Materialrohrs (13) aufgebrachten Isolierschicht (20) und aus wenigstens einer mittels Direktbeschichtung stoffschlüssig auf der Isolierschicht (20) aufgebrachten, Heizleiterbahnen (23) aufweisenden Heizschicht (22), wobei die Isolierschicht (20) und die Heizschicht (22) eine Schichtheizung mit geringer Dickenabmessung bilden und wobei die Isolierschicht (20) eine glasartige und/oder keramische Dielektrikumsschicht ist, die nach zumindest einem Einbrennprozeß gegenüber der dem Strömungskanal (14) zugeordneten Wandung (16) unter Druckvorspannung steht.

2. Heizung nach Anspruch 1, **dadurch gekennzeichnet, daß** der lineare thermische Ausdehnungskoeffizient (TEC_{DE}) der Dielektrikumsschicht (20) nach dem Einbrennprozeß kleiner ist als der lineare thermische Ausdehnungskoeffizient (TEC_{M}) der dem Strömungskanal (14) zugeordneten Wandung (16).

3. Heizung nach Anspruch 2, **dadurch gekennzeichnet, daß** der Betrag der Differenz zwischen TEC_{DE} und TEC_{M} wenigstens 5,0 ·10⁻⁶K⁻¹ beträgt.

4. Heizung nach einem der Ansprüche 1 bis 3, **dadurch gekennzeichnet, daß** die Dielektrikumsschicht (20) ein glasig-kristallines Materialsystem aufweist.

5. Heizung nach Anspruch 4, **dadurch gekennzeichnet, daß** das Materialsystem wenigstens ein vorgebildetes Glas enthält, welches bei einer vorgebbaren Einbrenntemperatur die Oberfläche der bevorzugt aus Metall bestehenden Wandung (16) benetzt und dabei zumindest teilweise in einen kristallinen Zustand übergeht.

6. Heizung nach Anspruch 4 oder 5, **dadurch gekennzeichnet, daß** das Materialsystem wenigstens ein weiteres Glas enthält, welches unter vorgebbaren Einbrennbedingungen nicht kristallisiert.

7. Heizung nach einem der Ansprüche 4 bis 6, **dadurch gekennzeichnet, daß** das Materialsystem wenigstens eine a priori kristalline Verbindung enthält.

8. Heizung nach einem der Ansprüche 4 bis 7, **dadurch gekennzeichnet, daß** die Dielektrikumsschicht (20) eine eingebrannte Folie ist.

9. Heizung nach einem der Ansprüche 4 bis 7, **dadurch gekennzeichnet, daß** die Dielektrikumsschicht (20) eine eingebrannte Dickschichtpaste ist.

10. Heizung nach Anspruch 9, **dadurch gekennzeichnet, daß** der Feststoffanteil der Dickschichtpaste ausschließlich aus einem im Temperaturbereich oberhalb 900 °C in situ kristallisierenden Glas besteht.

11. Heizung nach einem der Ansprüche 4 bis 10, **dadurch gekennzeichnet, daß** der lineare thermische Ausdehnungskoeffizient (TEC_{DE}) der Dielektrikumsschicht (20) zwischen 5 ·10⁻⁶K⁻¹ und 7 ·10⁻⁶K⁻¹ liegt.

12. Heizung nach einem der Ansprüche 4 bis 11, **dadurch gekennzeichnet, daß** die Dielektrikumsschicht (20) in Längsrichtung der Wandung (16) des Materialrohrs (13) einen Spalt aufweist.

13. Heizung nach einem der Ansprüche 1 bis 12, **dadurch gekennzeichnet, daß** die Heizschicht (22) dem Leistungsbedarf angepaßte Heizleiterbahnen (23) aufweist.

14. Heizung nach Anspruch 13, **dadurch gekennzeichnet, daß** auf der Heizschicht (22) wenigstens eine elektrisch isolierende Abdeckschicht (24) aufgebracht ist.

15. Heizung nach Anspruch 14, **dadurch gekennzeichnet, daß** zwischen der Dielektrikumsschicht (20), der Heizschicht (22) und der Abdeckschicht (24) wenigstens eine Kontaktschicht (26) vorgesehen ist.

16. Heizung nach einem der Ansprüche 13 bis 15, **dadurch gekennzeichnet, daß** wenigstens eine weitere Schicht (28) vorgesehen ist, deren elektrischer Widerstand von der Temperatur der Heizschicht (22) und/oder der Wandung (16) abhängig ist.

17. Heizung nach Anspruch 16, **dadurch gekennzeichnet, daß** die Widerstandsschicht (28) ein Thermoelement bildet.

18. Heizung nach einem der Ansprüche 13 bis 17, **dadurch gekennzeichnet, daß** die Widerstandsschicht (28) und die Heizschicht (22) in einer Ebene liegen.

19. Heizung nach Anspruch 18, **dadurch gekennzeichnet, daß** die Heizschicht (22), die Abdeckschicht (24), die Kontaktschicht (26) und/oder die Widerstandschicht (28) eingebrannte Folien oder eingebrannte Dickschichtpasten sind.

20. Heizung nach einem der Ansprüche 13 bis 19, **dadurch gekennzeichnet, daß** die Isolierschicht (20), die Heizschicht (22), die Abdeckschicht (24), die Kontaktschicht (26) und die Widerstandschicht (28) einen Schichtverbund bilden.

21. Heißkanaldüse mit einer Heizung nach einem der Ansprüche 1 bis 21, wobei die Heizung auf einem zylindrischen Materialrohr (13), einem Stab, einem Verteilerarm, einer Düse o.dgl. aufgebracht ist.

22. Verfahren zum Herstellen einer Heizung (10) für Heißkanalsysteme, insbesondere auf Heißkanalverteilern und/oder auf Heißkanaldüsen (12) mit einem Materialrohr (13), das wenigstens eine einem Strömungskanal (14) zugeordnete Wandung (16) aufweist, **dadurch gekennzeichnet, daß** wenigstens eine Isolierschicht (20) mittels Direktbeschichtung stoffschlüssig auf der Wandung (16) des Materialrohrs (13) und wenigstens eine Heizleiterbahnen (23) aufweisende Heizschicht (22) mittels Direktbeschichtung stoffschlüssig auf der Isolierschicht (20) aufgebracht werden, wobei zumindest eine Isolierschicht (20) eine keramische Dielektrikumsschicht ist und wobei innerhalb dieser Schicht beim Einbrennen eine Druckvorspannung gegenüber der dem Strömungskanal (14) zugeordneten Wandung (16) erzeugt wird.

23. Verfahren nach Anspruch 22, **dadurch gekennzeichnet, daß** die Heizschicht (22) beliebig gestaltete Heizleiterbahnen (23) aufweist.

24. Verfahren nach Anspruch 23, **dadurch gekennzeichnet, daß** auf der bzw. jeder Heizschicht (22) wenigstens eine elektrisch isolierende Abdeckschicht (24) aufgebracht wird.

25. Verfahren nach Anspruch 24, **dadurch gekennzeichnet, daß** zwischen der Dielektrikumsschicht (20), der Heizschicht (22) und der Abdeckschicht (24) wenigstens eine Kontaktschicht (26) aufgebracht wird.

26. Verfahren nach Anspruch 25, **dadurch gekennzeichnet, daß** wenigstens eine weitere Schicht (28) auf- oder eingebracht wird, deren elektrischer Widerstand von der Temperatur der Heizschicht (22) und/oder der Wandung (16) abhängig ist.

27. Verfahren nach einem der Ansprüche 22 bis 26, **dadurch gekennzeichnet, daß** jede Schicht (20, 22, 24, 26, 28) separat in Folien-, Dickschicht oder Siebdrucktechnik aufgebracht wird.

28. Verfahren nach Anspruch 27, **dadurch gekennzeichnet, daß** die in Dickschichttechnik aufgebrachten Schichten (20, 22, 24, 26, 28) unter Anwendung der Runddrucktechnologie in Form von Pasten aufgebracht werden.

29. Verfahren nach Anspruch 27 oder 28, **dadurch gekennzeichnet, daß** jede Schicht (20, 22, 24, 26, 28) separat aufgetragen und anschließend eingebrannt wird.

30. Verfahren nach Anspruch 27 oder 28, **dadurch gekennzeichnet, daß** alle Schichten (20, 22, 24, 26, 28) separat aufgetragen und simultan (co-firing) eingebrannt werden.

31. Verfahren nach Anspruch 29 oder 30, **dadurch gekennzeichnet, daß** der Einbrenn-Temperaturbereich zwischen 800 und 1100 °C liegt.

32. Verfahren nach einem der Ansprüche 22 bis 31, **dadurch gekennzeichnet, daß** zumindest die Dielektrikumsschicht (20) in Längsrichtung der Wandung (16) des Materialrohrs (13) mit einen Spalt versehen wird.

33. Verfahren nach einem der Ansprüche 22 bis 32, **dadurch gekennzeichnet, daß** die zu beschichtende Wandung (16) aus einem gehärteten oder zu härtendem Material besteht.

34. Verfahren nach Anspruch 33, **dadurch gekennzeichnet, daß** die Einbrenntemperatur jeder Schicht (20, 22, 24, 26, 28) die Härtungstemperatur des Wandungsmaterials nicht übersteigt.

35. Verfahren nach Anspruch 33 oder 34, **dadurch gekennzeichnet, daß** während wenigstens eines Einbrennungsprozesses der Härtungsprozeß der Wandung (16) durchgeführt wird.

36. Verfahren nach Anspruch 35, **dadurch gekennzeichnet, daß** die Einbrennbedingungen der Härtungstemperatur angepaßt sind.

37. Verfahren nach einem der Ansprüche 33 bis 36, **dadurch gekennzeichnet, daß** die Wandung (16) der Heißkanaldüse (12) induktiv auf Härtungs- und/oder Einbrenntemperatur erhitzt wird.

38. Verfahren nach einem der Ansprüche 22 bis 37, **dadurch gekennzeichnet, daß** in Abhängigkeit von den dehnungsrelevanten Kenngrößen der dem Strömungskanal (14) zugeordneten Wandung (16) eine spezifische Fehlanpassung des linearen thermischen Ausdehnungskoeffizienten der Dielektrikumsschicht (20) (TEC_{DE}) an den linearen thermischen Ausdehnungskoeffizienten der dem Strömungskanal (14) zugeordneten Wandung (16) (TEC_{M}) erfolgt, wobei die Differenzausdehnung TEC_{M} - TEC_{DE} wenigstens 5,0 ·10⁻⁶K⁻¹ beträgt.

39. Verfahren nach Anspruch 38, **dadurch gekennzeichnet, daß** der lineare thermische Ausdehnungskoeffizient der Dielektrikumsschicht (20) zwischen 5 ·10⁻⁶K⁻¹ und 7 ·10⁻⁶K⁻¹ liegt.

40. Verfahren nach einem der Ansprüche 22 bis 39, **dadurch gekennzeichnet, daß** die Dielektrikumsschicht (20) durch Einbrennen eines glasig-kristallinen Materialsystems auf der dem Strömungskanal (14) zugeordneten Wandung (16) erzeugt wird, wobei das Materialsystem wenigstens ein vorgebildetes Glas enthält, welches bei der jeweiligen Einbrenntemperatur die Metalloberfläche benetzt und zumindest teilweise in den kristallinen Zustand übergeht.

41. Verfahren nach Anspruch 40, **dadurch gekennzeichnet, daß** das Materialsystem wenigstens ein weiteres Glas enthält, welches unter Einbrennbedingungen nicht kristallisiert.

42. Verfahren nach Anspruch 44 oder 45, **dadurch gekennzeichnet, daß** das Materialsystem wenigstens eine a priori kristalline Verbindung enthält.

## Claims

1. Hot runner system, in particular a hot runner manifold and/or a hot runner nozzle (12) with a material tube (13) provided with at least one wall (16) associated to a flow channel (16), comprising an electric heating device (10) consisting of at least one insulation layer (20) firmly bonded to the wall (16) of the material tube (13) by direct coating and of at least one heating layer (22) that includes heat conducting paths (23) and is firmly bonded to the insulation layer (20) by direct coating, with the insulation layer (20) and the heating layer (22) forming a layer heater of little thickness and with the insulation layer (20) being a glass-like and/or ceramic dielectric layer under compressive pre-stress relative to the wall (16) associated to the flow channel (14) after having passed at least one baking process.

2. Heating device according to claim 1, **wherein** after the baking process, the coefficient of linear thermal expansion (TEC_{DE}) of the dielectric layer (20) is inferior to the coefficient of linear thermal expansion (TEC_{M}) of the wall (16) associated to the flow channel (14).

3. Heating device according to claim 2, **wherein** the absolute value of the difference between TEC_{DE} and TEC_{M} is at least 5,0•10⁻⁶K⁻¹ to 7•10⁻⁶K⁻¹.

4. Heating device according to any one of claims 1 to 3, **wherein** the dielectric layer (20) includes a glassy-crystalline material system.

5. Heating device according to claim 4, wherein the material system contains at least one preformed glass which moistens the surface of the preferably metallic wall (16) at a selectable baking temperature and is at least partially transformed into a crystalline state.

6. Heating device according to claim 4 or 5, **wherein** the material system contains at least one further preformed glass which is not transformed into a crystalline form under selectable baking conditions.

7. Heating device according to any one of claims 4 to 6, wherein the material system contains at least one composition that is a priori crystalline.

8. Heating device according to any one of claims 4 to 7, **wherein** the dielectric layer (20) is a baked foil.

9. Heating device according to any one of claims 4 to 7, **wherein** the dielectric layer (20) is a baked thick-film paste.

10. Heating device according to claim 9, **wherein** the solids content of the thick-film paste consists exclusively of a glass crystallizing in situ at temperatures ranging above 900 °C.

11. Heating device according to any one of claims 4 to 10, **wherein** the coefficient of linear thermal expansion (TEC_{DE}) of the dielectric layer (20) ranges from 5•10⁻⁶K⁻¹ to 7•10⁻⁶K⁻¹.

12. Heating device according to any one of claims 4 to 11, **wherein** the dielectric layer (20) comprises a gap in a longitudinal direction of the wall (16) of the material tube (13).

13. Heating device according to any one of claims 1 to 12, **wherein** the heating layer (22) comprises heat conducting paths (23) adapted to the required heat capacity.

14. Heating device according to claim 13, **wherein** at least one electrically insulating final cover (24) is applied onto the heating layer (22).

15. Heating device according to claim 14, **wherein** at least one contact layer (26) is provided between the dielectric layer (20), the heating layer (22) and the final cover (24).

16. Heating device according to any one of claims 13 to 15, **wherein** at least one further layer (28) is provided whose electrical resistance depends on the temperature of the heating layer (22) and/or of the wall (16).

17. Heating device according to claim 16, wherein the resistance layer (28) forms a thermocouple.

18. Heating device according to any one of claims 13 to 17, **wherein** the resistance layer (28) and the heating layer (22) are in-plane.

19. Heating device according to claim 18, **wherein** the heating layer (22), the final cover (24), the contact layer (26) and/or the resistance layer (28) are baked foils or baked thick-film pastes.

20. Heating device according to any one of claims 13 to 19, **wherein** the insulation layer (20), the heating layer (22), the final cover (24), the contact layer (26) and the resistance layer (28) form a multi-layer compound.

21. Hot runner nozzle with a Heating device according to any one of claims 1 to 21, **wherein** the heating device is applied onto a cylindrical material tube (13), a bar, a distribution arm, a nozzle, etc.

22. Method for producing a Heating device (10) for hot runner systems, in particular on hot runner manifolds and/or hot runner nozzles (12) with a material tube (13) comprising at least one wall (16) associated to a flow channel (14), wherein at least one insulation layer (20) is firmly bonded to the wall (16) of the material tube (13) by direct coating and at least one heating layer (22) comprising heat conducting paths (23) is firmly bonded to the insulation layer (20) by direct coating, with at least one insulation layer (20) being a ceramic dielectric layer and with a compressive pre-stress relative to the wall (16) associated to the flow channel (14) being produced in said layer during a baking process.

23. Method according to claim 22, wherein the heating layer (22) comprises heat conducting paths (23) of whichever design.

24. Method according to claim 23, wherein at least one electrically insulating final cover (24) is applied onto the or each heating layer (22).

25. Method according to claim 24, wherein at least one contact layer (26) is applied between the dielectric layer (20), the heating layer (22) and the final cover (24).

26. Method according to claim 25, wherein at least one further layer (28) is applied or inserted whose electrical resistance depends on the temperature of the heating layer (22) and/or of the wall (16).

27. Method according to any one of claims 22 to 26, **wherein** each layer (20, 22, 24, 26, 28) is separately applied by way of a foil, a thick film or by screen printing.

28. Method according to claim 27, wherein the layers (20, 22, 24, 26, 28) applied in thick-film technique are applied by way of pastes using round printing technology.

29. Method according to claim 27 or claim 28, wherein each layer (20, 22, 24, 26, 28) is separately applied and subsequently baked.

30. Method according to claim 27 or claim 28, wherein each layer (20, 22, 24, 26, 28) is separately applied and simultaneously baked (co-firing).

31. Method according to claim 29 or claim 30, **wherein** the baking temperature ranges from 800 °C to 1100 °C.

32. Method according to any one of claims 22 to 31, **wherein** at least the dielectric layer (20) is provided with a gap in a longitudinal direction of the wall (16) of the material tube (13).

33. Method according to any one of claims 22 to 32, **wherein** the wall (16) to be coated consists of a hardened material or a material to be hardened.

34. Method according to claim 33, wherein the baking temperature of each layer (20, 22, 24, 26, 28) does not exceed the hardening temperature of the wall material.

35. Method according to claim 33 or claim 34, wherein the hardening process of the wall (16) is realized during at least one baking process.

36. Method according to claim 35, wherein the baking conditions are adapted to the hardening temperature.

37. Method according to any one of claims 33 to 36, **wherein** the wall (16) of the hot runner nozzle (12) is heated by induction to hardening and/or baking temperature.

38. Method according to any one of claims 22 to 37, wherein a specific mismatch between the coefficient of linear thermal expansion (TEC_{DE}) of the dielectric layer (20) and the coefficient of linear thermal expansion (TEC_{M}) of the wall (16) associated to the flow channel (14) is realized, depending on the expansion-relevant parameters of the wall (16) associated to the flow channel (14), with the difference of expansion coefficients TEC_{M}-TEC_{DE} amounting to at least 5•10⁻⁶K⁻¹.

39. Method according to claim 38, wherein the coefficient of linear thermal expansion of the dielectric layer (20) ranges from 5•10⁻⁶K⁻¹ to 7•10⁻⁶K⁻¹.

40. Method according to any one of claims 22 to 39, wherein the dielectric layer (20) is produced by baking a glassy-crystalline material system on the wall (16) associated to the flow channel (14), with the material system containing at least one preformed glass which at baking temperature moistens the metallic surface and is at least partially transformed into a crystalline form.

41. Method according to claim 40, **wherein** the material system contains at least one further glass which does not crystallize under baking conditions.

42. Method according to claim 44 or claim 45, **wherein** the material system contains at least one compound that is a priori crystalline.

## Revendications

1. Système à canaux chauds, notamment blocs de distribution à canaux chauds et/ou buse à canal chaud (12) avec un tube de matière (13) comportant au moins un paroi (16) appartenant à un canal d'écoulement (14) et avec un dispositif de chauffage électrique (10) constitué d'au moins une couche isolante (20) appliquée directement sur le paroi (16) du tube de matière (13) de façon de former une liaison de matières avec le dernier, et d'au moins une couche chauffante (22) comprenant des conduites de chaleur (23) appliquée directement sur la couche isolante (20) de façon de former une liaison de matières avec la dernière, la couche isolante (20) et la couche chauffante (22) formant ainsi un système de chauffage à couches de faible épaisseur, et la couche isolante (20) étant une couche diélectrique vitreuse et/ou céramique soumise à des précontraintes de compression vis-à-vis du paroi (16) appartenant au canal d'écoulement (14) après avoir subi au moins un procédé de cuisson.

2. Dispositif de chauffage selon la revendication 1, **caractérisé en ce qu'**après le procès de cuisson, le coefficient thermique de dilatation linéaire (TEC_{DE}) de la couche diélectrique (20) est inférieur au coefficient thermique de dilatation linéaire (TEC_{M}) du paroi (16) appartenant au canal d'écoulement (14).

3. Dispositif de chauffage selon la revendication 2, **caractérisé en ce que** le montant absolu de la différence entre TEC_{DE} et TEC_{M} est au moins 5,0•10⁻⁶K⁻¹.

4. Dispositif de chauffage selon l'une des revendications 1 à 3, **caractérisé en ce que** la couche diélectrique (20) présente un système de matière vitreux-cristallin.

5. Dispositif de chauffage selon la revendication 4, **caractérisé en ce que** le système de matière contient au moins un verre préformé qui mouille à une température de cuisson déterminable la surface du paroi préférablement réalisé en métal, tout en subissant une transformation au moins partielle en état cristallin.

6. Dispositif de chauffage selon la revendication 4 ou 5, **caractérisé en ce que** le système de matière contient au moins un autre verre qui ne subit pas une transformation en état cristallin sous de conditions de cuisson déterminables.

7. Dispositif de chauffage selon l'une des revendications 4 à 6, **caractérisé en ce que** le système de matière contient au moins un composé a priori cristalline.

8. Dispositif de chauffage selon l'une des revendications 4 à 7, **caractérisé en ce que** la couche diélectrique (20) est une feuille cuite.

9. Dispositif de chauffage selon l'une des revendications 4 à 7, **caractérisé en ce que** la couche diélectrique (20) est une pâte cuite à couche épaisse.

10. Dispositif de chauffage selon la revendication 9, **caractérisé en ce que** le contenu en matières solides de la pâte à couche épaisse se compose exclusivement d'un verre cristallisant in situ dans la plage de température au-dessus de 900 °C.

11. Dispositif de chauffage selon l'une des revendications 4 à 10, **caractérisé en ce que** le coefficient de dilatation thermique linéaire (TEC_{DE}) de la couche diélectrique (20) est compris entre 5•10⁻⁶K⁻¹ et 7•10⁻⁶K⁻¹

12. Dispositif de chauffage selon l'une des revendications 4 à 11, **caractérisé en ce que** la couche diélectrique (20) comporte une fente en direction longitudinale du paroi (16) du tube de matière (13).

13. Dispositif de chauffage selon l'une des revendications 1 à 12, **caractérisé en ce que** la couche chauffante (22) comporte des conduites de chaleur (23) adaptées à la puissance requise.

14. Dispositif de chauffage selon la revendication 13, **caractérisé en ce qu'** au moins une couche de recouvrement (24) électriquement isolante est appliquée sur la couche chauffante (22).

15. Dispositif de chauffage selon la revendication 14, **caractérisé en ce qu'** au moins une couche de contact (26) est prévue entre la couche diélectrique (20), la couche chauffante (22) et la couche de recouvrement (24).

16. Dispositif de chauffage selon l'une des revendications 13 à 15, **caractérisé en ce qu'** au moins une autre couche (28) est prévue dont la résistance électrique dépend de la température de la couche chauffante (22) et/ou du paroi (16).

17. Dispositif de chauffage selon la revendication 16, **caractérisé en ce que** la couche de résistance (28) forme un thermocouple.

18. Dispositif de chauffage selon l'une des revendications 13 à 17, **caractérisé en ce que** la couche de résistance (28) et la couche chauffante (22) sont situés au même niveau.

19. Dispositif de chauffage selon la revendication 18, **caractérisé en ce que** la couche chauffante (22), la couche de recouvrement (24), la couche de contact (26) et/ou la couche de résistance (28) sont des feuilles cuites ou des pâtes à couche épaisse cuites.

20. Dispositif de chauffage selon l'une des revendications 13 à 19, **caractérisé en ce que** la couche isolante (20), la couche chauffante (22), la couche de recouvrement (24), la couche de contact (26) et la couche de résistance (28) forment une structure multicouches.

21. Buse à canal chaud avec un dispositif de chauffage selon l'une des revendications 1 à 21, le dispositif de chauffage étant appliqué sur un tube de matière cylindrique (13), une tige, une branche de distribution, une buse ou similaire.

22. Procédé pour la production d'un dispositif de chauffage (10) pour systèmes à canaux chauds, notamment sur des blocs de distribution à canaux chauds et/ou sur des buses à canal chaud (12) avec un tube de matière (13) comprenant au moins un paroi (16) appartenant à un canal d'écoulement (14), **caractérisé en ce qu'** au moins une couche isolante (20) est appliquée directement sur le paroi (16) du tube de matière (13) de façon de former une liaison de matières avec le dernier, et qu'au moins une couche chauffante (22) comprenant des conduites de chaleur (23) est appliquée directement sur la couche isolante (20) de façon de former une liaison de matières avec la dernière, au moins une couche isolante (20) étant une couche diélectrique céramique, et des précontraintes de compression vis-à-vis du paroi (16) appartenant au canal d'écoulement (14) étant produites dans cette couche pendant le procédé de cuisson.

23. Procédé selon la revendication 22, **caractérisé en ce que** la couche chauffante (22) comporte des conduites de chaleur (23) librement configurables.

24. Procédé selon la revendication 23, **caractérisé en ce qu'**au moins une couche de recouvrement (24) électriquement isolante est appliquée sur la ou chaque, respectivement, couche chauffante (22).

25. Procédé selon la revendication 24, **caractérisé en ce qu'**au moins une couche de contact (26) est appliquée entre la couche diélectrique (20), la couche chauffante (22) et la couche de recouvrement (24).

26. Procédé selon la revendication 25, **caractérisé en ce qu'**au moins une autre couche (28) est appliquée ou insérée dont la résistance électrique dépend de la température de la couche chauffante (22) et/ou du paroi (16).

27. Procédé selon l'une des revendications 22 à 26, **caractérisé en ce que** chaque couche (20, 22, 24, 26, 28) est appliquée séparément à partir de la technique à feuilles, à couche épaisse ou de sérigraphie.

28. Procédé selon la revendication 27, **caractérisé en ce que** les couches (20, 22, 24, 26, 28) appliquées à partir de la technique à couche épaisse sont appliquées en forme de pâtes en utilisant la technologie d'impression circulaire.

29. Procédé selon la revendication 27 ou 28, **caractérisé en ce que** chaque couche (20, 22, 24, 26, 28) est appliquée séparément et puis cuite.

30. Procédé selon la revendication 27 ou 28, **caractérisé en ce que** toutes les couches (20, 22, 24, 26, 28) est appliquées séparément et cuites simultanément (« co-firing »)

31. Procédé selon la revendication 29 ou 30, **caractérisé en ce que** la plage de température de cuisson est entre 800 et 1100 °C.

32. Procédé selon l'une des revendications 22 à 31, **caractérisé en ce qu'**au moins la couche diélectrique (20) est munie d'une fente en direction longitudinale du paroi (16) du tube de matière (13).

33. Procédé selon l'une des revendications 22 à 32, **caractérisé en ce que** le paroi (16) à revêtir est constitué d'une matière trempée ou à durcir.

34. Procédé selon la revendication 33, **caractérisé en ce que** la température de cuisson de chaque couche (20, 22, 24, 26, 28) ne dépasse pas la température de durcissement de la matière du paroi.

35. Procédé selon la revendication 33 ou 34, **caractérisé en ce que** le procès de durcissement du paroi (16) est mise en oeuvre pendant au moins un procès de cuisson.

36. Procédé selon la revendication 35, **caractérisé en ce que** les conditions de cuisson sont adaptées à la température de durcissement.

37. Procédé selon l'une des revendications 33 à 36, **caractérisé en ce que** le paroi (16) de la buse à canal chaud (12) est chauffée par induction à la température de durcissement et/ou de cuisson.

38. Procédé selon l'une des revendications 22 à 37, **caractérisé en ce qu**'une désadaptation spécifique du coefficient de dilatation thermique linéaire (TEC_{DE}) de la couche diélectrique (20) au coefficient de dilatation thermique linéaire (TEC_{M}) du paroi (16) appartenant au canal d'écoulement (14) est établie en fonction des paramètres relatifs à la dilatation du paroi (16) appartenant au canal d'écoulement (14), la différence de dilatation TEC_{M}-TEC_{DE} étant au moins 5,0•10⁻⁶K⁻¹.

39. Procédé selon la revendication 38, **caractérisé en ce que** le coefficient de dilatation thermique linéaire de la couche diélectrique (20) est compris entre 5•10⁻⁶K⁻¹ et 7 •10⁻⁶K⁻¹.

40. Procédé selon l'une des revendications 22 à 39, **caractérisé en ce que** la couche diélectrique (20) est produite par cuisson d'un système de matière vitreux-cristallin sur le paroi (16) appartenant au canal d'écoulement (14), le système de matière contenant au moins un verre préformé qui mouille la surface métallique à la température de cuisson correspondante, tout en subissant une transformation au moins partielle en état cristallin.

41. Procédé selon la revendication 40, **caractérisé en ce que** le système de matière contient au moins un autre verre qui ne subit pas une transformation en état cristallin sous les conditions de cuisson.

42. Procédé selon la revendication 44 ou 45, **caractérisé en ce que** le système de matière contient au moins un composé a priori cristallin.
